# EUROPÄISCHE PATENTSCHRIFT

(11) **EP 1 927 799 B1**
(45) Veröffentlichungstag und Bekanntmachung des Hinweises auf die Patenterteilung: **16.06.2010**
(21) Anmeldenummer: 07120670.0
(22) Anmeldetag: 14.11.2007
(51) Int. Cl.: F16J 15/06, F24C 15/02

(54) **Hausgerätdichtungseinheit**
Household appliance sealing unit
Unité d'étanchéification d'un appareil ménager

(30) Priorität: 30.11.2006 DE 102006056577; 22.02.2007 DE 102007008793
(43) Veröffentlichungstag der Anmeldung: 04.06.2008
(73) Patentinhaber: BSH Bosch und Siemens Hausgeräte GmbH, 81739 München (DE); BLANCO CS GmbH + Co KG, 75038 Oberderdingen (DE)
(72) Erfinder: Brunner, Dieter, 76571, Gaggenau (DE); Erdmann, Klaus, 75438, Knittlingen (DE); Wurst, Wolfgang, 72760, Reutlingen (DE)

(56) Entgegenhaltungen:
- EP-A- 0 697 568
- DE-A1- 10 044 376
- DE-C- 955 819
- US-A1- 2004 079 032
- US-A1- 2005 120 633

## Beschreibung

Die Erfindung geht aus von einer Hausgerätdichtungseinheit, insbesondere einer Gargerätdichtungseinheit oder einer Geschirrspülerdichtungseinheit, umfassend ein Dichtungsmittel und eine Aufnahmeeinheit, nach dem Oberbegriff des Anspruchs 1.

Es sind Gargeräte bekannt, die im Bereich einer Garraumöffnung mit einer Aufnahme für ein Dichtungsmittel versehen sind. Das Dichtungsmittel, welches als eine Anpressdichtung ausgebildet ist, wird bei einer Montage in diese Aufnahme eingepresst und ist durch eine daraus entstehende Pressverbindung gehalten. Die Aufnahme ist mit einer glatten Oberfläche profiliert und die Halterung erfolgt im Wesentlichen mittels Reibungskräften, die an der Kontaktstelle zwischen der Anpressdichtung und der Aufnahme entstehen. Aufgrund von abwechselnden Aufwärme- und Abkühlungsprozessen des Gargeräts verändern sich Materialeigenschaften der Anpressdichtung, wodurch die die Anpressdichtung haltende Pressverbindung ausfallen kann und sich das Dichtungsmittel von der Aufnahme lösen kann.

Aus der DE 100 44 376 A1 ist ein Backgerät mit einem Backkasten und einer schließbaren und mittels eines im Bereich des Backkastens angeordneten Dichtungsmittels abdichtbaren Backgerättür bekannt, wobei das Dichtungsmittel zumindest bei geschlossener Tür eine vom Anlagebereich an der Tür zum Anlagebereich am Backkasten hin abfallende Ableitfläche zum Ableiten von Kondensat auf den Backkastenboden aufweist.

Die EP 0 697 568 A2 zeigt eine frontseitige Verbindung eines Backrohres mit einem Backrohr-Aufnahmerahmen, bei der, zur thermischen Isolation dieser Teile, ein Luftspalt vorgesehen ist, worin zwischen im Wesentlichen parallel eingebogenen planen Randpartien einfach ein Dichtungsprofil für die Backrohrtür eingeführt werden kann.

Die Aufgabe der Erfindung besteht insbesondere darin, eine gattungsgemäße Hausgerätdichtungseinheit mit verbesserten Eigenschaften hinsichtlich einer langlebigen Halterung des Dichtungsmittels bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Hausgerätdichtungseinheit, insbesondere einer Gargerätdichtungseinheit oder einer Geschirrspülerdichtungseinheit, umfassend ein Dichtungsmittel und eine Aufnahmeeinheit, die zur Halterung des Dichtungsmittels durch Herstellung einer Einpressverbindung mit einem Flachprofil ausgeformt ist.

Es wird vorgeschlagen, dass die Hausgerätdichtungseinheit eine Sicherungseinheit aufweist, die dazu vorgesehen ist, das Dichtungsmittel in dessen eingepresstem Zustand zu sichern. Dadurch kann bei einer besonders einfachen Ausführung der Aufnahmeeinheit vorteilhaft eine erhöhte Sicherheit in der Halterung des Dichtungsmittels erreicht werden. Das in der Aufnahmeeinheit aufgenommene Dichtungsmittel ist vorzugsweise aufgrund des Verhältnisses der Dimensionierung der Aufnahmeeinheit zur Dimension des Dichtungsmittels durch eine Presskraft der Aufnahmeeinheitswandungen gehalten. Die Aufnahmeeinheit ist vorzugsweise aus einem Blechteil ausgeformt. Unter einem "Flachprofil" kann insbesondere eine Ausgestaltung der Aufnahmeeinheit verstanden werden, in der die Aufnahmeeinheit sich aus zumindest im Wesentlichen, insbesondere vollständig glatt gestalteten Wandungen als Anlageflächen zum Anliegen an dem Dichtungsmittel zusammensetzt. Dabei erfolgt die Halterung des Dichtungsmittels insbesondere durch Reibungskräfte, die an der Schnittstelle des Dichtungsmittels mit den Wandungen entstehen. Verändern sich Materialeigenschaften des Dichtungsmittels während dessen Alterungsprozesses kann durch die Sicherungseinheit, die eine zur Einpressverbindung zusätzliche Halterung des Dichtungsmittels ermöglicht, ein unerwünschtes Lösen des Dichtungsmittels von der Aufnahmeeinheit verhindert werden. Die Sicherungseinheit kann beispielsweise als Verankerungseinheit ausgebildet sein, die zumindest eine Ankerstelle zum Verankern des Dichtungsmittels bildet. Hierzu bildet die Sicherungseinheit vorzugsweise eine Verengung eines durch die Aufnahmeeinheit gebildeten Aufnahmeraums, wodurch eine feste Verankerung erreicht werden kann.

Die Aufnahmeeinheit kann beispielsweise mit einem U-förmigen Profil ausgeformt sein. Hierbei bildet die Aufnahmeeinheit eine Rille, in welche das Dichtungsmittel eingepresst wird, die entlang einer Hausgeräteraumöffnung eines Hausgeräts, insbesondere einer Garraumöffnung eines Gargeräts oder einer Spülraumöffnung eines Geschirrspülers, umlaufend verläuft. Hierbei ist die Aufnahmeeinheit vorzugsweise einstückig an ein Frontwandungsteil des Hausgeräts angeformt, das die Hausgeräteraumöffnung bildet.

Das Dichtungsmittel kann dabei insbesondere als Anpressdichtung ausgebildet sein, an welche eine den Hausgeräteraum verschließende Tür bei deren Schließbewegung anschlägt. Hierbei dient das Dichtungsmittel dazu, den durch die Tür verschlossenen Hausgeräteraum nach außen abzudichten. Ein geringer Aufwand bei der Herstellung der Aufnahmeeinheit kann erreicht werden, wenn diese von einem Tiefziehteil gebildet ist.

In einer bevorzugten Ausgestaltung der Erfindung wird vorgeschlagen, dass die Hausgerätdichtungseinheit eine Befestigungseinheit aufweist, die zur Befestigung der Aufnahmeeinheit an einer Trägereinheit vorgesehen ist und zumindest teilweise einstückig mit der Sicherungseinheit ausgebildet ist. Dadurch können vorteilhafterweise Bauraum, Bauteile, Konstruktionsaufwand und Kosten eingespart werden.

Eine besonders einfache Ausgestaltung der Hausgerätdichtungseinheit und eine kompakte Bauform eines Hausgeräts im Bereich der Hausgeräteraumöffnung können erreicht werden, wenn die Hausgerätdichtungseinheit eine mittels der Befestigungseinheit an der Aufnahmeeinheit befestigte Trägereinheit aufweist, die als Hausgeräteraumwandung zur Begrenzung eines Hausgeräteraums ausgebildet ist. Insbesondere kann eine robuste Abstützung der Aufnahmeeinheit erreicht werden. Die Trägereinheit als Hausgeräteraumwandung bildet besonders vorteilhaft einen Hausgeräteraummantel und ist vorzugsweise rohrförmig ausgebildet.

Eine besonders einfache Ausführung der Sicherungseinheit und ein besonders geringer Herstellungsaufwand können erreicht werden, wenn die Sicherungseinheit von einer Schweißnaht gebildet ist. Bildet die Aufnahmeeinheit einen Aufnahmeraum für das Dichtungsmittel und bildet die Schweißnaht einen Überstand, welcher in den Aufnahmeraum eingreift, kann besonders einfach eine feste Verankerung des Dichtungsmittels an der Aufnahmeeinheit erreicht werden.

In einer vorteilhaften Weiterbildung der Erfindung weist die Aufnahmeeinheit einen Außenkantenbereich auf, der eine Öffnung zum Einführen des Dichtungsmittels bildet, wobei die Sicherungseinheit im Außenkantenbereich angeordnet ist, wodurch der Schutz gegen ein unerwünschtes Lösen des Dichtungsmittels weiter erhöht werden kann. Hierbei ist die Sicherungseinheit vorteilhafterweise als Hinterschnitt ausgebildet. Die Aufnahmeeinheit begrenzt einen Aufnahmeraum für das Dichtungsmittel von einem Außenraum. Von diesem Außenraum wird das Dichtungsmittel über die vom Außenkantenbereich gebildete Öffnung in den Aufnahmeraum vom Außenkantenbereich geführt.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Frontwandungsteil eines Backofens in einer Frontansicht,
- Fig.2: die Anordnung des Frontwandungsteils mit einer Dichtungsaufnahme und eines Mantelwandungsteils,
- Fig. 3: die Anordnung aus Figur 2 mit einer alternativen Ausführung der Dichtungsaufnahme,
- Fig. 4: eine in der Dichtungsaufnahme aus Figur 2 eingepresste Anpressdichtung und
- Fig. 5: einen Backofen, in welchem die Anordnung des Frontwandungsteils und des Mantelwandungsteils montiert ist.

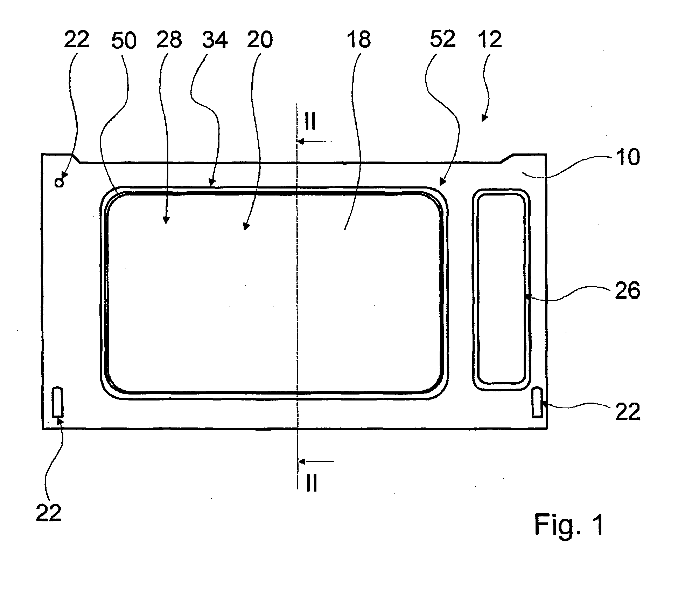

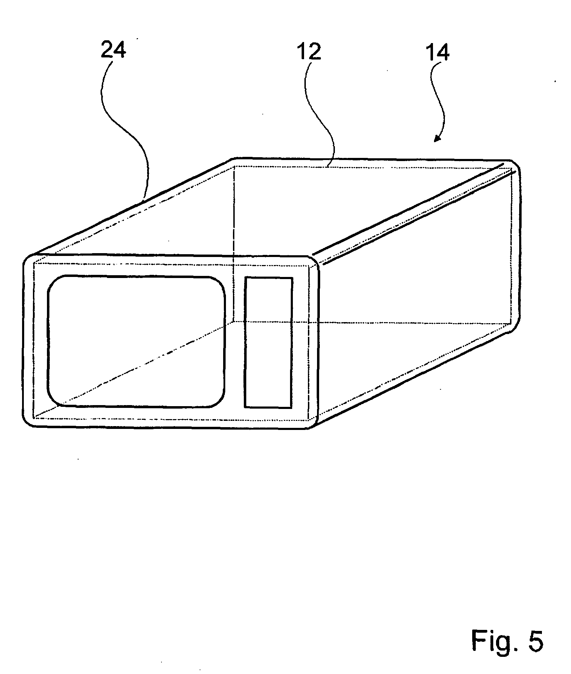

Figur 1 zeigt ein als Frontwandungsteil ausgebildetes Wandungsteil 10 einer Gargerätwandungsanordnung 12 eines als Gargerät 14 ausgebildeten, in Figur 5 dargestellten Hausgeräts. Das Gargerät 14 ist als Backofen ausgebildet. Die folgende Beschreibung findet auf weitere Arten von Hausgeräten Anwendung, wie insbesondere bei einem als Geschirrspüler ausgebildeten Hausgerät.

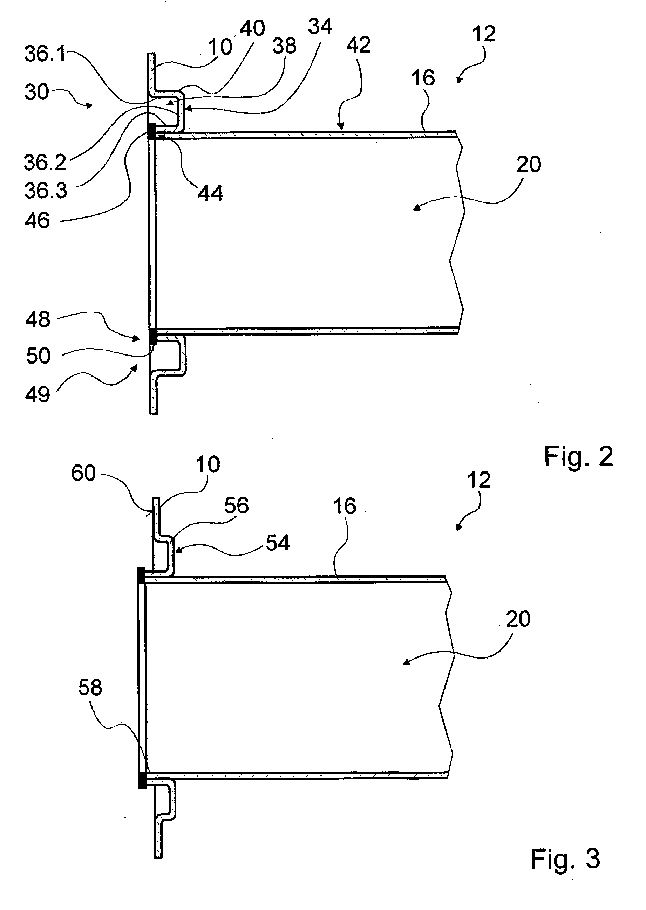

Die Gargerätwandungsanordnung 12 weist ferner ein als Mantelwandungsteil ausgebildetes Wandungsteil 16 (siehe Figur 2) und ein als Rückwandungsteil ausgeführtes Wandungsteil 18 auf. Die Wandungsteile 16 und 18 begrenzen einen als Garraum ausgebildeten Hausgeräteraum 20. Die Wandungsteile 10, 16 und 18 sind aus Edelstahl hergestellt. Das Wandungsteil 10 ist von einem Blechteil gebildet, aus welchem mehrere Öffnungen ausgespart sind. Es sind Öffnungen 22 zur Aufnahme von Befestigungsmitteln, die zur Befestigung des Wandungsteils 10 an einem Gehäuse 24 des Gargeräts 14 (siehe Figur 5) dienen, eine Öffnung 26 zur Aufnahme einer nicht näher dargestellten elektrischen Schalteinheit und eine Öffnung, welche eine als Garraumöffnung 28 ausgebildete Hausgeräteraumöffnung darstellt, zu erkennen. Gegenüber der Garraumöffnung 28 angeordnet ist das als Rückwandungsteil ausgebildete Wandungsteil 18 durch die Garraumöffnung 28 zu sehen.

Figur 2 zeigt die Anordnung des Hausgeräteraums 20 und des als Frontwandungsteil ausgebildeten Wandungsteils 10 in einer Schnittansicht senkrecht zur Ebene des Frontwandungsteils. Der Hausgeräteraum 20 ist im Rückbereich gegenüber der Garraumöffnung mittels des als Rückwandungteil ausgebildeten Wandungsteils 18 (nicht gezeigt) verschlossen. Das als Mantelwandungsteil ausgebildete Wandungsteil 16 ist rohrförmig ausgebildet und umschließt den Hausgeräteraum 20.

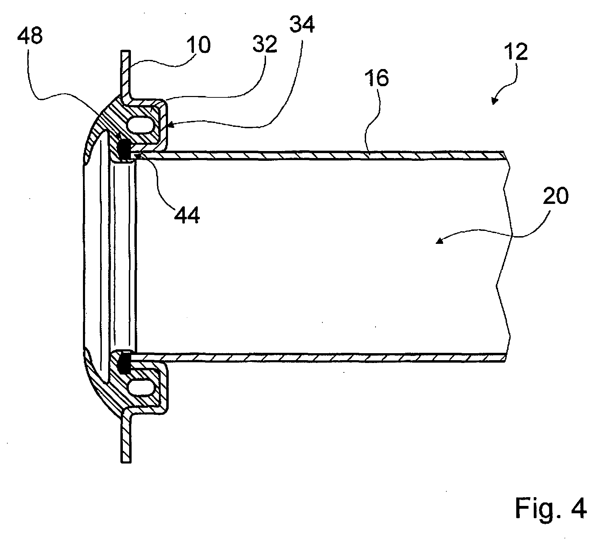

Die Gargerätwandungsanordnung 12 weist eine als Gargerätdichtungseinheit 30 ausgebildete Hausgerätdichtungseinheit auf, die zur Aufnahme eines als Anpressdichtung ausgebildeten, in Figur 4 dargestellten Dichtungsmittels 32 vorgesehen ist. Hierzu weist die Gargerätdichtungseinheit 30 eine Aufnahmeeinheit 34 auf, die mit einem rillenförmigen Profil ausgeformt ist. Dieses rillenförmige Profil ist als Flachprofil ausgebildet. Dabei setzt sich die Aufnahmeeinheit 34 aus Wandungen 36 zusammen, die eine glatte Oberfläche bilden. Diese Wandungen 36 begrenzen einen Aufnahmeraum 38, in welchen das Dichtungsmittel 32 bei einer Montage des Gargeräts 14 eingepresst wird. Ferner sind die Wandungen 36 als Anlagefläche zum Anliegen des Dichtungsmittels 32 ausgebildet. In seinem eingepressten Zustand ist das Dichtungsmittel 32 insbesondere durch Reibungskräfte gehalten, die an der Kontaktstelle zwischen der Dichtungsmitteloberfläche und den als Anlagefläche ausgebildeten Wandungen 36 entstehen. Zur Herstellung des rillenförmigen Flachprofils wird ein Teilbereich 40 des als Frontwandungsteil ausgebildeten Wandungsteils 10 mittels eines Tiefziehverfahrens ausgeformt. Wie der Figur 1 zu entnehmen ist, erstreckt sich die rillenförmige Aufnahmeeinheit 34 um die Garraumöffnung 28 und entlang des Umfangs der Garraumöffnung 28 vollständig umlaufend.

Die Aufnahmeeinheit 34 ist ferner an einer Trägereinheit 42 mittels einer Befestigungseinheit 44 befestigt. Hierbei ist die Trägereinheit 42 von dem als Mantelwandungsteil ausgebildeten Wandungsteil 16 gebildet, welches eine den Hausgeräteraum 20 begrenzende Garraumwandung bildet. Das Wandungsteil 16 ist mittels einer die Befestigungseinheit 44 bildenden Schweißnaht 46 mit dem als Frontwandungsteil ausgebildeten Wandungsteil 10 befestigt. Diese Schweißnaht 46 erstreckt sich entlang des Umfangs der Garraumöffnung 28 vollständig umlaufend um die Garraumöffnung 28. Diese Schweißnaht 46 dient ferner als Sicherungseinheit 48, die dazu vorgesehen ist, das Dichtungsmittel 32 in dessen eingepresstem Zustand in der Aufnahmeeinheit 34 zu sichern. Hierzu bildet die Schweißnaht 46 im Außenkantenbereich 49 des Aufnahmeraums 38 einen Überstand 50, welcher in den Aufnahmeraum 38 eingreift. Dieser Überstand 50 stellt eine Verengung des Aufnahmeraums 38 dar und bildet einen Verankerungspunkt, an welchem das Dichtungsmittel 32 verankert werden kann (siehe Figur 4). In diesem Ausführungsbeispiel erstreckt sich der Überstand 50 komplett entlang des Umfangs der Garraumöffnung 28 um die Garraumöffnung 28, wie der Figur 1 zu entnehmen ist. Alternativ ist möglich, dass die Schweißnaht 46 nur streckenweise mit dem Überstand 50 ausgestaltet ist, und zwar vorzugsweise ausschließlich in den Abbugbereichen 52 bzw. Eckenbereichen der rillenförmigen Aufnahmeeinheit 34.

In Figur 3 ist eine alternative Ausführung einer Aufnahmeeinheit 54 zur Aufnahme eines Dichtungsmittels gezeigt. Die Aufnahme ist wie im vorherigen Ausführungsbeispiel von einem Teilbereich 56 des Wandungsteils 10 gebildet, welches mittels eines Tiefziehverfahrens ausgeformt ist. Die Aufnahmeeinheit 54 bildet im Zusammenwirken mit dem Wandungsteil 16 einen Vorsprung 58, welcher aus einer vom Wandungsteil 10 gebildeten Frontfläche 60 herausragt.

Figur 4 zeigt die Anordnung der Wandungsteile 10, 16, wobei das als Anpressdichtung ausgebildete Dichtungsmittel 32 in der Aufnahmeeinheit 34 eingepresst angeordnet ist. Die Anpressdichtung, welche aus Silikon hergestellt ist, dient als Anschlag zum Anschlagen einer nicht näher dargestellten Ofentür bei deren Zuschließen. Im geschlossenen Zustand des Hausgeräteraums 20 dient das Dichtungsmittel 32 zur Abdichtung des Hausgeräteraums 20 nach außen. Mittels der Sicherungseinheit 48, an welcher das Dichtungsmittel 32 verankert ist, kann ein unerwünschtes Lösen des Dichtungsmittels 32 verhindert werden, wenn die das Dichtungsmittel 32 haltende Pressverbindung, z.B. aufgrund von Veränderungen von Materialeigenschaften des Dichtungsmittels 32, ausfällt.

### Bezugszeichen

- 10: Wandungsteil
- 12: Gargerätwandungsanordnung
- 14: Gargerät
- 16: Wandungsteil
- 18: Wandungsteil
- 20: Hausgeräteraum
- 22: Öffnung
- 24: Gehäuse
- 26: Öffnung
- 28: Garraumöffnung
- 30: Gargerätdichtungseinheit
- 32: Dichtungsmittel
- 34: Aufnahmeeinheit
- 36: Wandung
- 38: Aufnahmeraum
- 40: Teilbereich
- 42: Trägereinheit
- 44: Befestigungseinheit
- 46: Schweißnaht
- 48: Sicherungseinheit
- 49: Außenkantenbereich
- 50: Überstand
- 52: Abbugbereich
- 54: Aufnahmeeinheit
- 56: Teilbereich
- 58: Vorsprung
- 60: Frontfläche

## Patentansprüche

1. Hausgerätdichtungseinheit, insbesondere Gargerät- oder Geschirrspülerdichtungseinheit, umfassend ein Dichtungsmittel (32) und eine Aufnahmeeinheit (34; 54), die zur Halterung des Dichtungsmittels (32) durch Herstellung einer Einpressverbindung mit einem Flachprofil ausgeformt ist, und mit einer Sicherungseinheit (48), **dadurch gekennzeichnet, dass** die Sicherungseinheit von einer Schweißnaht (46) gebildet und dazu vorgesehen ist, das Dichtungsmittel (32) in dessen eingepresstem Zustand zu sichern, wobei ein von der Schweißnaht (46) gebildeter Überstand (50) in einen von der Aufnahmeeinheit (34; 54) gebildeten Aufnahmeraum (38) für das Dichtungsmittel (32) eingreift.

2. Hausgerätdichtungseinheit nach Anspruch 1, **dadurch gekennzeichnet, dass** die Aufnahmeeinheit (34; 54) von einem Tiefziehteil gebildet ist.

3. Hausgerätdichtungseinheit nach Anspruch 1 oder 2, **gekennzeichnet durch** eine Befestigungseinheit (44), die zur Befestigung der Aufnahmeeinheit (34; 54) an einer Trägereinheit (42) vorgesehen ist und zumindest teilweise einstückig mit der Sicherungseinheit (48) ausgebildet ist.

4. Hausgerätdichtungseinheit nach Anspruch 3, **gekennzeichnet durch** eine mittels der Befestigungseinheit (44) an der Aufnahmeeinheit (34; 54) befestigte Trägereinheit (42), die als Hausgeräteraumwandung zur Begrenzung eines Hausgeräteraums (20) ausgebildet ist.

5. Hausgerätdichtungseinheit nach einem der vorhergehenden Ansprüche, **dadurch gekennzeichnet, dass** die Aufnahmeeinheit (34; 54) einen Außenkantenbereich (49) aufweist, der eine Öffnung zum Einführen des Dichtungsmittels (32) bildet, und dass die Sicherungseinheit (48) im Außenkantenbereich (49) angeordnet ist.

6. Hausgerät mit einer Hausgerätdichtungseinheit nach einem der vorhergehenden Ansprüche.

## Claims

1. Domestic appliance sealing unit, particularly cooking appliance sealing unit or dishwasher sealing unit, comprising a sealing means (32) and a receiving unit (34; 54), which is shaped for retention of the sealing means (32) by producing a press-in connection with a flat profile, and with a securing unit (48), **characterised in that** the securing unit is formed by a weld seam (46) and provided for the purpose of securing the sealing means (32) in the pressed-in state thereof, wherein a projection (50), which is formed by the weld seam (46), engages in a receiving space (38), which is formed by the receiving unit (34; 54), for the sealing means (32).

2. Domestic appliance sealing unit according to claim 1, **characterised in that** the receiving unit (34; 54) is formed by a deep-drawn part.

3. Domestic appliance sealing unit according to claim 1 or 2, **characterised by** a fastening unit (44) which is provided for fastening the receiving unit (34; 54) to a carrier unit (42) and is constructed at least in part integrally with the securing unit (48).

4. Domestic appliance sealing unit according to claim 3, **characterised by** a carrier unit (42) which is fastened to the receiving unit (34; 54) by means of the fastening unit (44) and which is constructed as a domestic appliance surrounding wall for bounding a domestic appliance space (20).

5. Domestic appliance sealing unit according to any one of the preceding claims, **characterised in that** the receiving unit (34; 54) has an outer edge region (49) which forms an opening for introduction of the sealing means (32) and that the securing unit (48) is arranged in the outer edge region (49).

6. Domestic appliance with a domestic appliance sealing unit according to any one of the preceding claims.

## Revendications

1. Unité d'étanchéité pour un appareil ménager, en particulier unité d'étanchéité pour appareil de cuisson ou unité d'étanchéité pour lave-vaisselle, comprenant un moyen d'étanchéité (32) et une unité de logement (34 ; 54), qui est formée pour la fixation du moyen d'étanchéité (32) par l'établissement d'une liaison à enfoncement avec un profilé plat, et comprenant une unité de blocage (48), **caractérisée en ce que** l'unité de blocage est formée par une soudure (46) et est prévue pour bloquer le moyen d'étanchéité (32) dans son état enfoncé, une partie saillante (50) formée par la soudure (46) s'engageant dans un espace de logement (38) formé par l'unité de logement (34 ; 54) pour le moyen d'étanchéité (32).

2. Unité d'étanchéité pour appareil ménager selon la revendication 1, **caractérisée en ce que** l'unité de logement (34 ; 54) est formée par une partie d'emboutissage.

3. Unité d'étanchéité pour appareil ménager selon la revendication 1 ou 2, **caractérisée par** une unité de fixation (44), qui est prévue pour la fixation de l'unité de logement (34 ; 54) sur une unité support (42) et est formée au moins en partie d'une seule pièce avec l'unité de blocage (48).

4. Unité d'étanchéité pour appareil ménager selon la revendication 3, **caractérisée par** une unité support (42) fixée au moyen de l'unité de fixation (44) sur l'unité de logement (34 ; 54), qui est conçue comme paroi d'espace d'appareil ménager pour délimiter un espace d'appareil ménager (20).

5. Unité d'étanchéité pour appareil ménager selon l'une quelconque des revendications précédentes, **caractérisée en ce que** l'unité de logement (34 ; 54) présente une zone d'arête extérieure (49) qui forme une ouverture pour l'introduction du moyen d'étanchéité (32) et **en ce que** l'unité de blocage (48) est disposée dans la zone de l'arête extérieure (49).

6. Appareil ménager comprenant une unité d'étanchéité pour appareil ménager selon l'une quelconque des revendications précédentes.
